# EUROPEAN PATENT SPECIFICATION

(11) **EP 1 798 135 B1**
(45) Date of publication and mention of the grant of the patent: **08.09.2010**
(21) Application number: 05027576.7
(22) Date of filing: 16.12.2005
(51) Int. Cl.: B62D 25/16, B62D 65/12

(54) **Wheelhouse assembly**
Radhausbau
Construction d'un passage de roue

(43) Date of publication of application: 20.06.2007
(73) Proprietor: Ford Global Technologies, LLC, Dearborn, MI 48126 (US)
(72) Inventor: Gustavsson, Anders, SE-412 59 Göteborg (SE)
(74) Representative: VALEA AB

(56) References cited:
- WO-A-02/24512
- DE-A1- 19 817 567
- DE-A1- 19 930 762

## Description

### Field of the invention

The present invention relates to wheelhouse assemblies for providing protection within wheelhouses of road vehicles. Moreover, the present invention also concerns methods of assembling such wheelhouse assemblies to road vehicles. Furthermore, the invention relates to fasteners and wheelhouse liners for use in such methods and assemblies.

### Background of the invention

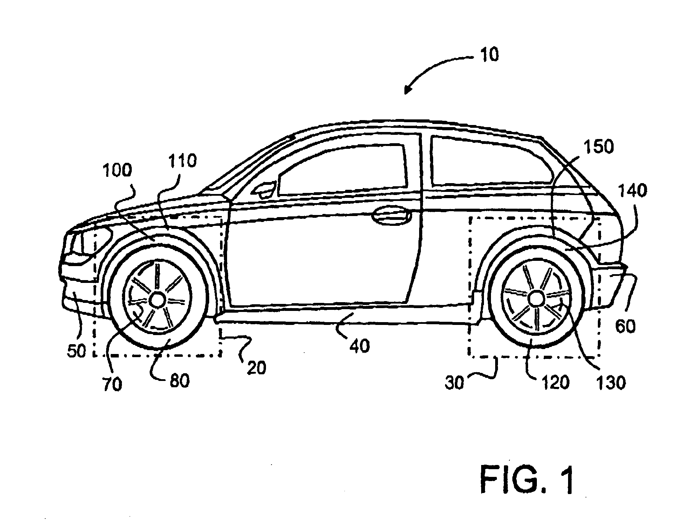

Referring to Figure 1, there is shown a contemporary road vehicle indicated generally by 10. The vehicle 10 includes two front wheelhouses, for example including a left-side front wheelhouse 20, and two rear wheelhouses, for example including a left-side rear wheelhouse 30. The wheelhouses 20, 30 are important regions of the vehicle 10 for both functional and aesthetic purposes. For example, the wheelhouses 20, 30 provide wheel-protection as well as at least partially preventing debris from rotating wheels being ejected from the vehicle 10. The wheelhouses 20, 30 also have an aesthetic purpose of rendering corresponding wheels of the vehicle 10 less visually prominent which is of importance in contemporary vehicle design, wherein relatively larger wheel diameters are preferred for enhancing vehicle fuel economy by reducing vehicle rolling resistance as well as providing enhanced absorption of vibrations caused by road unevenness.

In order to provide protection to body panel paint-work of the vehicle 10, it is contemporary design practice to employ molded plastics material components at various positions around the vehicle 10 which are prone to being hit by debris, for example gravel and stones. Such components include, for example, a front spoiler or bumper 50 at a lower front portion of the vehicle 10, lateral fenders 40 along lower lateral sides of the vehicle 10, and a rear bumper 60 at a lower rear portion of the vehicle 10. It has also become conventional practice to include molded plastics material fender extensions in the wheelhouses, for example the front wheelhouse 20 includes a front wheel 70 with its associated tyre (tire) 80 together with a wheelhouse liner 100 and a fender extension 110. Similarly, the rear wheelhouse 30 includes a rear wheel 130 with its associated tyre 120 together with a wheelhouse liner 140 and a fender extension 150. On account of including the fender extensions 110, 150, the vehicle 10 is provided with a continuous protection to its body panels along a lower peripheral edge of the vehicle 10. However, inclusion of the fender extensions 110, 150 in proximity to all four wheels of the vehicle 10 represents an additional task during manufacture and increases a number of parts needing to be assembled together to fabricate the vehicle 10.

Inclusion of the fender extensions 110, 150 also introduces other issues. Slight relative movement of the fender extensions 110, 150 relative to body panels onto which they mount, for example due to vibration when the vehicle 10 is in operation, can potentially cause the fender extensions 110, 150 to abrade paintwork of the body panels onto which they contact. Such abrasion of the paint of the bodywork not only is potentially unsightly but can also potentially give rise to regions whereat rusting and corrosion can occur. It is conventional practice to employ tape to buffer where plastics material molded components can potentially abrade body panel paintwork. However, use of such tape not only complicates manufacture of the vehicle 10 but can, for aesthetic reasons, be regarded as a sub-optimal approach.

Moreover, mounting of the wheelhouse liners 100, 140 is contemporarily found to be a time-consuming activity during manufacture of the vehicle 10, such mounting beneficially susceptible to being improved.

Another example of wheel house liner according the preamble of claim 1 is known from the document DE 198 17 567 A1.

### Summary of the Invention

An object of the invention is to provide a wheelhouse assembly which is more straightforward and efficient to mount to a road vehicle during manufacture or repair.

According to a first aspect of the present invention, there is provided a wheelhouse assembly mountable to a wheelhouse of a road vehicle, the wheelhouse including a peripheral edge along at least an upper region thereof,
the assembly including a fender extension for at least partially covering and protecting the peripheral edge, and a wheelhouse liner for at least partially covering and protecting an inside surface of the wheelhouse,
characterized in that the wheelhouse liner includes hook-like features for retaining the wheelhouse liner onto the peripheral edge at least during assembly or repair of the road vehicle, and the fender extension and the wheelhouse liner are operable to be mutually coupled together in operation by one or more fasteners engaged substantially in a region of the peripheral edge, thereby mutually securing the fender extension and the wheelhouse liner in the region substantially at the peripheral edge.

The invention is of advantage in that the wheelhouse assembly is easier to mount and install onto road vehicles.

Benefits provided by the present invention include, for example, at least one of the following:
(i) less expensive assembly of road vehicles implemented with the present invention on account of avoiding a need for pressure equipment during manufacture;
(ii) less expensive fender extensions implemented pursuant to the present invention on account of being able to avoid a need to utilize buffer tape when mounting to road vehicles; and
(iii) less expensive disassembly and repair of road vehicles on account of fewer parts being required and certain parts being potentially reusable.

Preferably, in the assembly, the hook-like features include one or more hooks included in the wheelhouse liner for clipping the liner to the peripheral edge. Such hook-like features are of benefit in practice on account of their ability to engage onto the peripheral edge without a person performing installation of the wheelhouse liner having to undertake precision alignment of parts.

More preferably, in the assembly, the one or more hooks are operable to retain the wheelhouse liner in position on the peripheral edge prior to addition of the fender extension and the one or more fasteners. Having the wheelhouse liner installed prior to attaching the fender extension renders assembly of the vehicle more efficient and straight forward.

Yet more preferably, in the assembly, the one or more hooks are operable to clip onto an inwardly-folded flange of the peripheral edge of the wheelhouse. Such a manner of clipping the one or more hooks is convenient to implement during assembly or repair of the vehicle.

Preferably, in the assembly, a portion of each of the one or more fasteners is adapted to be pre-assembled into the fender extension prior to the fender extension being coupled to the wheelhouse liner via the region of the peripheral edge of the wheelhouse. Pre-assembly of the first and third parts is effective at reducing a number of components to be handled by a person assembling the vehicle.

Preferably, in the assembly, the one or more fasteners are operable to couple the fender extension in compressive engagement onto the peripheral edge. Such compressive engagement is of benefit in that it is capable of avoiding a need to employ buffer tape which is complex and awkward to use during manufacture of the vehicle.

Preferably, in the assembly, the fender extension, the wheelhouse liner and the one or more fasteners are implemented as plastics material molded components or rubber molded components. Such materials are of benefit on account of their light weight, high strength and resilience to corrosion.

Preferably, in the assembly, the fender extension and the wheelhouse liner are shaped to mutually cooperate so as to render the peripheral edge substantially enclosed when the assembly is installed on the wheelhouse. Such mutual cooperation is susceptible to protecting the peripheral edge from damage and corrosion. Moreover, such protection is especially pertinent when the peripheral edge is implemented in metal finished with a paint coating.

Preferably, in the assembly, the fender extension and the wheelhouse liner when installed onto the wheelhouse mutually cooperate to provide a gap for drainage purposes from the peripheral edge. Drainage and/or aeration of the peripheral edge is of benefit to reduce a potential degree of corrosion occurring in operation.

Preferably, in the assembly, each of the one or more fasteners includes resilient spring members-operable to snap-engage onto a peripheral edge of a corresponding fastening hole provided in the region of the peripheral edge, thereby coupling in a compressive manner the fender extension to the peripheral edge. Such a compressive manner of mounting is of benefit in avoiding a need to employ buffer tape or similar types of interface materials.

Preferably, in the assembly, each of the one or more fasteners includes a first component mountable to the fender extension, a second component snap-engageable onto a corresponding hole in the region of the peripheral edge, and a third component mountable to the wheelhouse liner, and wherein the second component includes at its first and second extreme ends features which are press-couplable to the first and third components respectively. Use of such components provides for potentially rapid and efficient assembly of the vehicle during manufacture and/or repair.

Preferably, in the assembly, the second component includes at least partially spherical structures at its first and second extreme ends couplable into resilient complementary recesses provided in the first and third components. Such spherical structures are robust in practice and provide a positive retention in the first and third components.

Preferably, in the assembly, the first and third components are provided with peripheral engaging projections for enabling them to be preassembled onto the fender extension and the wheelhouse liner respectively, prior to the fender extension and the wheelhouse liner being mutually coupled together via the second component engaging onto the region of the peripheral edge.

According to a second aspect of the invention, there is provided a wheelhouse liner mountable to a wheelhouse of a road vehicle, the wheelhouse including a peripheral edge along at least an upper region thereof, characterized in that the wheelhouse liner includes hook-like features for engaging onto an inwardly-folded flange of the peripheral edge of the wheelhouse, the features being operable to retain the wheelhouse liner in position at least during assembly or repair of the road vehicle.

Preferably, in the wheelhouse liner, the hook-like features comprise one or more hooks.

Preferably, the wheelhouse liner is a plastics material molded part, wherein the one or more hooks are integrally molded into said wheelhouse liner.

Preferably, in the wheelhouse liner, the one or more hooks are operable to maintain the wheelhouse liner in a defined corresponding spatial position relative to the peripheral edge of the wheelhouse.

According to a third aspect of the invention, there is provided a method of mounting a wheelhouse assembly to a wheelhouse of a road vehicle, the wheelhouse including a peripheral edge along at least an upper region thereof,
the assembly including a fender extension for at least partially covering and protecting the peripheral edge, and a wheelhouse liner for at least partially covering and protecting an inside surface of the wheelhouse,
characterized in that the method includes steps of:
(a) including in the wheelhouse liner hook-like features for retaining the fender extension onto the peripheral edge at least during assembly or repair of the road vehicle; and
(b) mutually coupling the fender extension and the wheelhouse liner by applying one or more fasteners engaged substantially at a region of the peripheral edge,
thereby mutually securing together the fender extension and the wheelhouse liner in the region substantially at the peripheral edge.

Preferably, in the method, each of said one or more fasteners includes a first component for engaging onto the fender extension, a third component for engaging onto the wheelhouse liner, and a second component couplable to the first and third components, the method including further steps of:
(c) preassembling the first and third components onto the fender extension and the wheelhouse liner respectively;
(d) assembling the wheelhouse liner into the wheelhouse via the hook-like features engaging substantially onto the peripheral edge; and
(e) coupling the fender extension via the first component coupled to said second component substantially to a region of the peripheral edge and further to the third component assembled onto the wheelhouse liner.

Preferably, in the method, there is included a step of snap-engaging the second component into a corresponding hole in the region of the peripheral edge for compressively holding said fender extension into engagement with the wheelhouse.

According to a fourth aspect of the invention, there is provided a fastener for implementing a method according to the third aspect of the invention, the fastener including first, second and third mutually cooperating components, wherein:
(f) the first component is configured for engagement in operation onto a fender extension;
(g) the third component is configured for engagement in operation onto a wheelhouse liner; and
(h) the second component is configured to engage at its first end into said first component, to engage at its second end onto said third component, and to engage into a hole substantially in a region of a peripheral edge of a wheelhouse for securing the fender extension and the wheelhouse liner mutually together substantially to the region of the peripheral edge.

Preferably, in the fastener, the first and third components include projections on a peripheral region thereof for enabling them in operation to preassembled to the fender extension and the wheelhouse liner respectively.

Preferably, in the fastener, the second component includes at its first and second extreme ends at least partially spherical structures which are press engageable into corresponding resilient recesses provided in the first and third components respectively.

Preferably, in the fastener, the second component includes projecting resilient members for engaging onto the hole so as to hold the fender extension in compression against the wheelhouse.

Preferably, the fastener is fabricated from one of more of: molded plastics material, molded rubber material.

According to a fifth aspect of the invention, there is provided a fastener for mutually coupling first and second parts of a road vehicle together and also to the road vehicle, said fastener including first, second and third mutually cooperating components, wherein:
(a) said first component is configured for engagement in operation onto the first part;
(b) said third component is configured for engagement in operation onto the second part; and
(c) said second component is configured to engage at its first end into said first component, to engage at its second end onto said third component, and to engage into a hole substantially in a region of a peripheral edge of the vehicle for securing said first part and said second part mutually together substantially to said region of said peripheral edge.

It will be appreciated that features of the invention are susceptible to being combined into any combination without departing from the scope of the invention as defined by the accompanying claims.

### Description of the diagrams

Embodiments of the invention will now be described, by way of example only, with reference to the following diagrams wherein:
- Figure 1: is a schematic illustration of a road vehicle including front and rear wheelhouses;
- Figure 2: is a schematic lateral cross-sectional illustration of a wheelhouse of the vehicle illustrated in Figure 1, the illustration including a fender extension, a wheelhouse liner, a body panel of the vehicle, and a wheel assembly of the vehicle;
- Figure 3: is a more detailed view of the wheelhouse liner illustrated in Figure 2;
- Figure 4: is a cross-sectional view of mutual mounting of the fender extension to the wheelhouse liner and to the body panel as illustrated in Figure 2, such mutual mounting employing a multipart fastener according to the invention;
- Figure 5: is a more detailed illustration of the multipart fastener of Figure 4, the fastener including a fender extension clip, a wheelhouse liner clip, and a body-side fender clip;
- Figure 6: is a more detailed illustration of the wheelhouse liner clip of Figure 5 in plan-, side- and cross-sectional views;
- Figure 7: is a more detailed illustration of the fender extension clip of Figure 5 in plan-, side- and cross-section views; and
- Figure 8: is a more detailed illustration of the body-side fender clip of Figure 5 in side- and cross-sectional views.

### Description of embodiments of the invention

Referring to the road vehicle 10 illustrated in Figure 1, an object of the present invention is to render manufacture and, if necessary, repair of the vehicle 10 more straightforward and simple as will now be elucidated further. The present invention at least partially achieves this object by employing a hook-like arrangement in one or more of the wheelhouse liners of the vehicle 10, for example in the wheelhouse liners 100, 140, in combination with employing multipart fasteners which are operable to couple the fender extensions 110, 150 to associated body panels and associated wheelhouse liners 100, 140 in a simple manner conducive to efficient manufacture, and, if necessary, repair of the vehicle 10. The hook-like arrangement renders the wheelhouse liners 100, 140 easier to maintain in position whilst the fender extensions 110, 150 are installed using the aforementioned multipart fasteners. Such an implementation is susceptible to circumventing a need to employ buffer tape and thereby simplify manufacture of the vehicle 10.

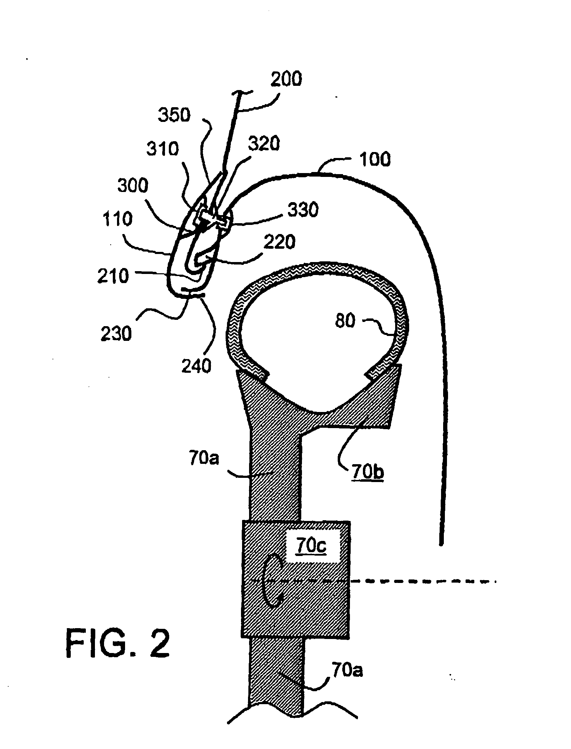

Referring to Figure 2, there is shown in approximate schematic form an embodiment of the present invention. Figure 2 is an illustration corresponding to a lateral cross-sectional view of the front wheelhouse 20. There is shown the wheel 70 including a central hub 70c, a plurality of cast radial members 70a and a cast rim 70b for receiving a tubeless tyre, namely the aforementioned tyre 80; the wheel 70 is beneficially a unitary cast aluminium (aluminum) component. The aforementioned body panel associated with the front wheelhouse 20 is denoted by 200. The body panel 200 is shown to include an inwardly-bent flange 210 at its extreme edge. The flange 210 is operable to abut to hook-like features, for example one or more hooks 220 molded integrally with the wheelhouse liner 100, so as to render the wheelhouse liner 100 retained firmly in position in respect of the body panel 200 when installed in the vehicle 10, for example during manufacturing thereof. The wheelhouse liner 100 is optionally also beneficially provided with an outwardly-directed molded flange 230 for protecting in operation the flange 210 of the body panel 200. In a similar manner, the fender extension 110 is also beneficially provided with an inwardly-directed flange 240 as illustrated operable to cooperate with the flange 230 of the wheelhouse liner 110 so that the flange 210 of the panel 200 is comprehensively protected from damage, for example from impact from gravel and stones, but nevertheless provided with a gap through which drainage and aeration can occur to reduce a risk of corrosion occurring in operation.

During manufacture, the wheelhouse liner 100 is initially installed with its hook-like features engaging onto the flange 210 of the body panel 200. Thereafter, the fender extension 110 is applied by way of multipart fasteners, each such fastener including first, second and third components 310, 320, 330 respectively. The first component 310 is a fender extension clip which is conveniently preassembled into an extension feature 300 molded into an inside surface of the fender extension 110 as illustrated. Moreover, the third component 330 is a wheelhouse liner clip which is conveniently preassembled into the wheelhouse liner 100 prior to the liner 100 being installed into the vehicle 10. Furthermore, the second component 320 is a body-side fender clip which is operable to couple the first and third components 310, 330 together in a compressive manner as well as anchoring them in respect of a corresponding hole in the body panel 200. Such anchoring is effective at maintaining the fender extension 110 in fixed spatial relationship in respect of the body panel 200, thereby reducing a tendency for the fender extension 110 to abrade paintwork of the body panel 200 where they mutually come into contact. The fastener enables the fender extension 110 to be coupled to the body panel 200 and to the wheelhouse liner 100 in a simple manner which is less time-consuming during manufacture of the vehicle 10 and potentially circumvents a need to utilize the aforementioned buffer tape.

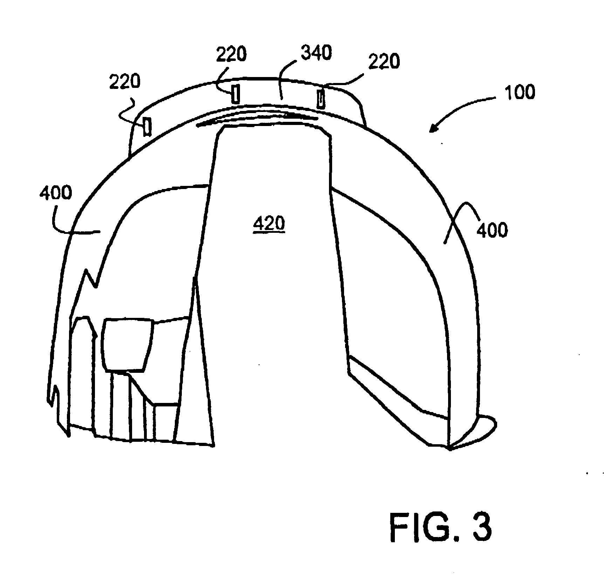

Referring now to Figure 3, the wheelhouse liner 100 is shown in greater detail. The wheelhouse liner 100 is a plastics material unitary molded component which is operable to protect other portions of a chassis of the vehicle 10 from corrosion and damage from impacts of gravel and stones thrown up by the wheel 70 when in operation on a road surface. The wheelhouse liner 100 includes first and second side curved portions 400 as well as a central opening 420 for accommodating suspension members and couplings for the wheel 70. Optionally, the wheelhouse liner 100 includes an integral flange 340 into which one or more hooks, for example three hooks 220, are formed.

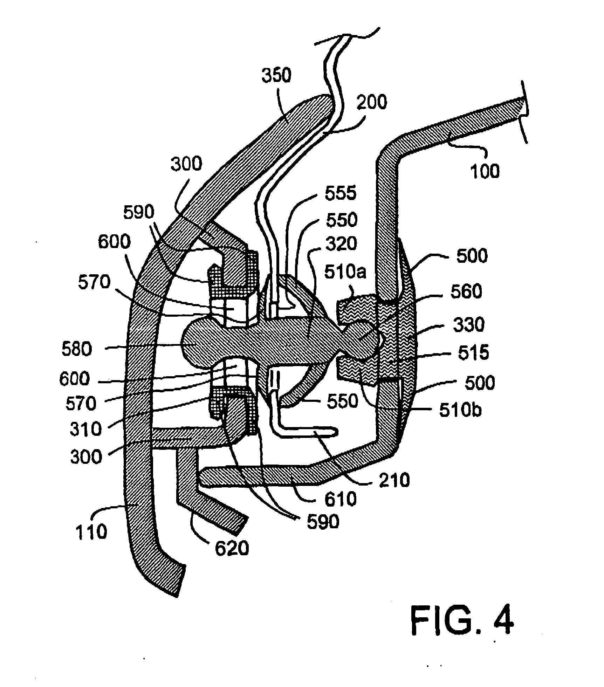

The aforesaid multipart fastener including the first, second and third components 310, 320, 330 will now be further elucidated with reference to Figure 4. The fender extension 110 includes an inwardly-directed edge 350 which is operable to abut into a recessed ridge provided on the body panel 200. The fender extension 110 is shown to include the aforementioned extension feature 300 which includes a hole for accommodating the first component 310. Optionally, the fender extension 110, as a variant to Figure 2, can include a flange feature 620 for cooperating with the wheelhouse liner 100 as illustrated to protect the flange 210 of the body panel 200.

The third component 330 is shown mounted within a hole provided to the wheelhouse liner 100. Moreover, the third component 330 includes a substantially circular skirt 500 for engaging onto an inside surface of the wheelhouse liner 100; the circular skirt 500 optionally has an outside diameter in a range of 20 mm to 25 mm. Furthermore, the third component 330 includes two resilient projections 510a, 510b defining a gap of substantially 3 mm to 4 mm width therebetween for receiving a spherical end portion of the second component 320. In a region between the skirt 500 and the projections 510a, 510b, there is included a relatively narrower waist 515 of substantial 8 mm diameter for engaging into the corresponding hole formed in the wheelhouse liner 100. The third component 330 is therefore susceptible to being snap-fitted to the wheelhouse liner 100 in manufacture rendering such manufacture efficient and rapid. When installed in the wheelhouse liner 100, the projections 510a, 510b are sufficiently flexible to elastically deform to receive the aforementioned spherical end portion of the second component 320 as illustrated.

The second component 320 includes substantially at its first elongate end two resilient side arms 550 which are operable to resiliently engage onto an inside surface of the body panel 200. The first end of the second component 320 includes the aforementioned spherical end portion denoted by 560; the spherical end portion 560 preferably has a nominal diameter of substantially 4 mm. Towards a second elongate end of the second component 320, there is included a resilient circular skirt 570 for engaging compressively onto an outside surface of the body panel 200; the resilient side arms 650 are operable to maintain the circular skirt 570 firmly engaged onto the outer surface of the body panel 200; the circular skirt 570 preferably has an external diameter of substantially 14 mm. At a second end of the second component 320, there is included another spherical end portion denoted by 580 defined by way of a waist 585; the spherical end portion 580 has a diameter of substantially 5 mm, and the waist 585 has a diameter of substantially 3 mm. The second component 320 is operable to engage into a hole 555 provided in the body panel 200.

The first component 310 is designed so that it can be preassembled into a hole provided in the aforesaid extension feature 300. The first component 310 comprises a plurality of inwardly-directly resilient projections 600 for receiving the end spherical portion 580 and engaging onto the waist 585; the projections 600 define a central hole having a diameter of substantial 4.3 mm and are substantially in a range of 2 mm to 3 mm long. Moreover, the first component 310 includes circular flanges 590 having external diameters of substantially 16 mm to 17 mm for ensuring secure mounting of the first component 310 to the fender extension 110. In a similar manner to the third component 330, the first component 310 is optionally preassembled into the fender extension 110 prior to the fender extension being offered to the panel 200 and its associated already-installed wheelhouse liner 100.

The wheelhouse liner 100 conveniently, for example, includes a flange 610 operable to cooperate with a corresponding flange 620 of the fender extension 110 so as to render the flange 210 of the of the body panel 200 well protected from damage in use.

Assembly of the wheelhouse liner 100, the fender extension 110 and one or more fasteners each including the components 310, 320, 330 is preferably executed according to a method of the invention. The wheelhouse liner 100, the fender extension 110 and one or more fasteners each including the components 310, 320, 330 are conveniently referred to as being a wheelhouse assembly. A method of assembly such a wheelhouse assembly pursuant to the present invention includes, for example, steps of:
(a) preassembling one or more pairs of the first and third components 310, 330 respectively into the fender extension 110 and the wheelhouse liner 100 respectively;
(b) installing the wheelhouse liner 100 and its associated third component 330 into the vehicle 10 so that one or more hooks 220 provided on the wheelhouse liner 100 engage onto the flange 210 of the body panel 200 of the wheelhouse 20 so as to firmly secure the wheelhouse liner 100 to the body panel 200;
(c) installing one or more examples of the second component 320 into holes 555 provided in the body panel 200 in a region substantially adjacent to the flange 210 so that their spherical end portions 560 snappingly engage into corresponding one or more third components 330 provided on the wheelhouse liner 100; the one or more examples of the second component 320 are operable to engage in a compressive manner so that their arms 550 bind the one or more second components 320 to the body panel 200; and
(d) offering the one or more first components 310 preassembled onto the fender extension 110 to the spherical end portions 580 of the corresponding second components 320 installed onto the body panel 200 so that the projections 600 of the one or more first components 310 engage onto the waist 585 of the corresponding second components 320, thereby holding the fender extension 110 compressively against the body panel 200.

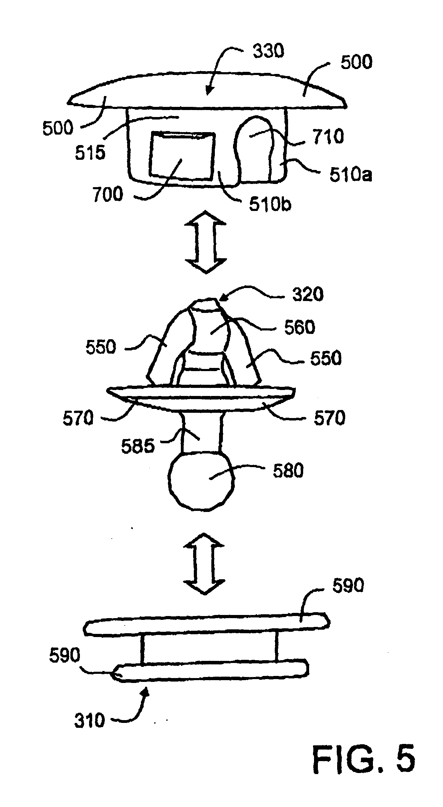

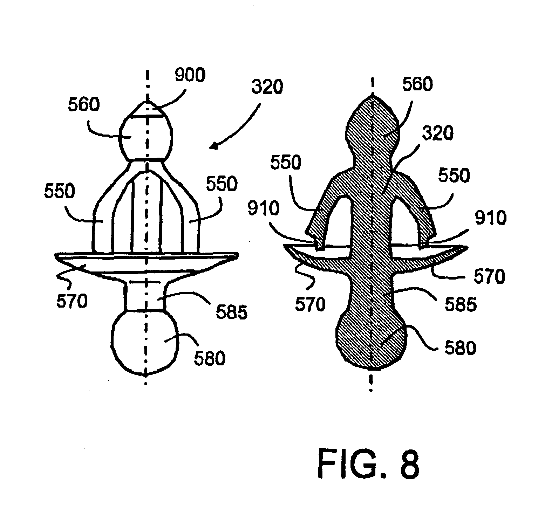

in Figure 5, it will be appreciated that embodiments of the invention are susceptible to being modified. For example, the second component 320 can be optionally fabricated so that the compliant arms 550 are attached to the spherical end portion 560, thereby rendering the second component 320 shorter in elongate length, or enabling the arms 550 to be more compliant; however, as illustrated in Figures 4 and 8, the arms 550 can be attached closer to a middle region of the second component 320 if required. The third component 330 is designed to cope with both such variants of the second component 320 by way of the gap denoted by 710 provided between its projections 510a, 510b; the gap 710 conveniently has a width of substantially 3 mm to 4 mm. The projections 510a, 510b are conveniently provided with lateral features 700 defining the waist 515 and also for ensuring that the third component 330 is positively retained in use within its hole provided in the wheelhouse liner 100.

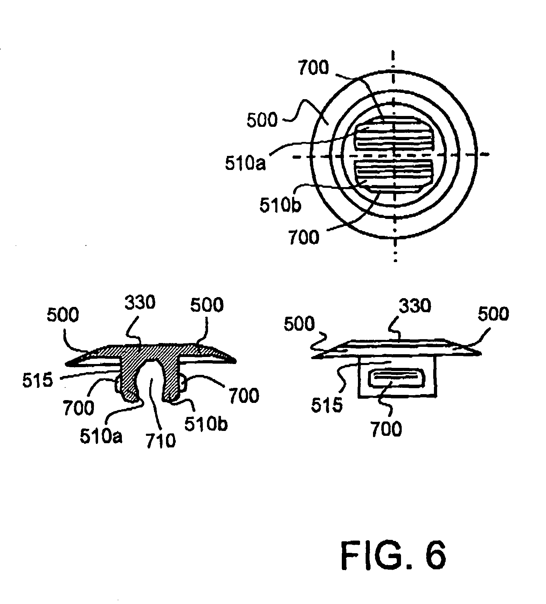

The third component 330 is illustrated in further detail in Figure 6. The skirt 500 is configured to be resiliently compressible against the wheelhouse liner 100 by way of the skirt 500 being formed with a slightly downwardly-directed peripheral edge to the skirt 500 as illustrated in cross-section. As mentioned in the foregoing, the skirt 500 optionally has an outside diameter of substantially 22 mm and a compression range of substantially 1 mm.

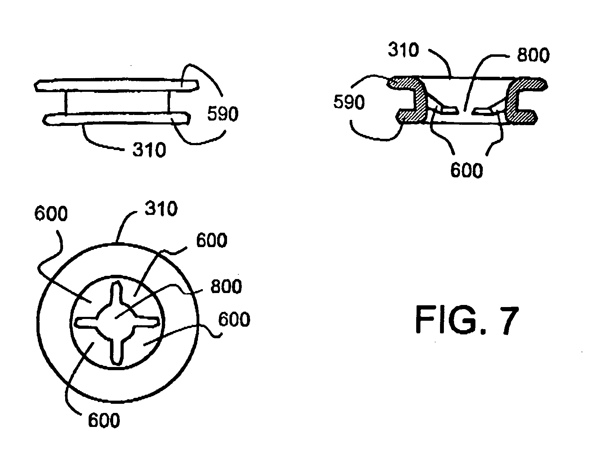

Referring next to Figure 7, the first component 310 is preferably fabricated from a molded material, for example a flexible plastics material, synthetic rubber or similar. The first component 310 includes the aforementioned flanges 590 coupled via a substantially cylindrical middle portion; the flanges 590 preferably have an outside diameter of substantially 16 mm to 17 mm. Inwardly directed from the cylindrical middle portion are the aforementioned projections 600; for example, as shown in plan view, there are provided four such projections 600 defining a substantially circular central hole 800 for receiving the spherical portion 580 of the second component 320, and for binding efficiently onto the waist 585 associated with this spherical portion 580. The projections 600 are optionally of tapered thickness, namely thickest towards the cylindrical middle portion and thinnest at an edge of the hole 800. Moreover, the projections 600 are also beneficially of slightly bent form so as to cooperate to assist entry of the spherical end portion 580 into the hole 800.

Referring to Figure 8, the second component 320 is illustrated in side view and cross-sectional view. The second component 320 is optionally of substantially 19 mm to 20 mm length, and implemented so that its spherical end portion 560 is provided with a conical tip section 900; alternatively, the spherical end portion 560 can have a rounded extreme end. The resilient arms 550 optionally have at least partially pointed end portions 910 for concentrating applied force so as to more positively retain the second part 320 in compressive coupling to the hole 555 in the body panel 200. As shown, the skirt 570 is outwardly tapered and upwardly formed so as to provide a compressive force for engaging the pointed end portions 910 positively onto the body panel 200 as elucidated earlier, the skirt 570 optionally has an external diameter of substantially 14 mm. Moreover, the arms 550 are sufficiently resilient to enable the arms 550 to be deflected inwardly when the second component 320 is installed into the hole 555, whereupon the arms 550 subsequently spring outwardly to engage onto a region substantially at an edge of the hole 555 to ensure positive retention of the second component 320 onto the body panel 200.

In summary, it will be appreciated from the foregoing that a combination of:
(a) the hooks 220 provided on the wheelhouse liner 100 cooperating with flanges 210 formed on the body panel 200; and
(b) one of more fasteners, each fastener including the components 310, 320, 330, cooperating with one or more corresponding holes 555 formed in the body panel 200,
are capable of providing for convenient and efficient assembly of the wheelhouse liner 100 and the fender extension 110 onto the vehicle 10. Such a manner of assembly potentially avoids a need to utilize buffer tape to protect paintwork on the panel 200. Beneficially, the fender extension 110 is provided with inwardly facing ribs to interface onto the paintwork on the body panel 200 so that abrasion of the paintwork by the ribs due to vibration of the vehicle 10 occurring in operation does not substantially occur, thereby reducing a risk of encountering corrosion in the body panel 200.

Although the present invention is described in relation to the wheelhouse 20, it will be appreciated that the present invention is equally applicable also to one or more other wheelhouses of the vehicle 10. Moreover, the present invention is also susceptible to being applied to other parts of the vehicle 10. For example, the fastener comprising the components 310, 320, 330 can be used for attaching bumpers to the vehicle 10, for attaching internal trim to an interior of the vehicle 10, and for attaching number plates to the vehicle 10. Additionally, the fastener can be used for maintaining internal parts of an engine of the vehicle 10 in position, for example bundles of wires and flexible pipes.

Modifications to embodiments of the invention described in the foregoing are possible without departing from the scope of the invention as defined by the accompanying claims.

Numerals included within parentheses in the appended claims are intended to assist understanding of the appended claims and not in any way to affect legal scope of the appended claims.

## Claims

1. A wheelhouse liner (100) mountable to a wheelhouse (20, 30) of a road vehicle (10), said wheelhouse including a peripheral edge (210) along at least an upper region thereof, **characterized in that** said wheelhouse liner (100) includes hook-like features (220) for engaging onto an inwardly-folded flange (210) of said peripheral edge of said wheel house (20, 30), said features (220) being operable to retain said wheelhouse liner (100) in position at least during assembly or repair of said road vehicle (10).

2. A wheelhouse liner (100) as claimed in claim 2, wherein said hook-like features (220) comprise one or more hooks (220).

3. A wheelhouse liner (100) as claimed in claim 2, wherein said wheelhouse liner (100) is a plastics material molded part, wherein said one or more hooks (220) are integrally molded into said wheelhouse liner (100).

4. A wheelhouse liner (100) as claimed in claim 2 or 3, wherein said one or more hooks (220) are operable to maintain said wheelhouse liner (100) in a defined corresponding spatial position relative to said peripheral edge (210) of said wheelhouse (20, 30).

5. A wheelhouse assembly (100, 110, 310, 320, 330) mountable to a wheelhouse (20, 30) of a road vehicle (10), said wheelhouse (20, 30) including a peripheral edge (210) along at least an upper region thereof,
said assembly (100, 110, 310, 320, 330) including a fender extension (110) for at least partially covering and protecting said peripheral edge (210), and a wheelhouse liner (100) as claimed in claim 1 for at least partially covering and protecting an inside surface of said wheelhouse (20, 30),
**characterized in that** said wheelhouse liner includes hook-like features (220) for retaining said wheelhouse liner (100) onto said peripheral edge (210) at least during assembly or repair of said road vehicle (10), and said fender extension (110) and said wheelhouse liner (100) are operable to be mutually coupled together in operation by one or more fasteners (310, 320, 330) engaged substantially in a region of said peripheral edge (210), thereby mutually securing said fender extension (110) and said wheelhouse liner (100) in the region substantially at said peripheral edge (210).

6. An assembly (100, 110, 310, 320, 330) according to claim 5, wherein said hook-like features (220) include one or more hooks (220) included in said wheelhouse liner (100) for clipping said liner (100) to said peripheral edge (210).

7. An assembly (100, 110, 310, 320, 33) as claimed in claim 6, wherein said one or more hooks (220) are operable to retain said wheelhouse liner (100) in position on said peripheral edge prior to addition of said fender extension (110) and said one or more fasteners (310, 320, 330).

8. An assembly (100, 110, 310, 320, 330) as claimed in claim 6, wherein said one or more hooks (220) are operable to clip onto an inwardly-folded flange (210) of said peripheral edge of said wheelhouse (20, 30).

9. An assembly (100, 110, 310, 320, 330) as claimed in claim 5, 6, 7 or 8, wherein a portion (310) of each of said one or more fasteners (310, 320, 330) is adapted to be pre-assembled into said fender extension (110) prior to said fender extension (110) being coupled to said wheelhouse liner (100) via said region of said peripheral edge (210) of said wheelhouse (20, 30).

10. An assembly (100, 110, 310, 320, 33) as claimed in any one of claims 5 to 9, wherein said one or more fasteners (310, 320, 330) are operable to couple said fender extension (110) in compressive engagement onto said peripheral edge.

11. An assembly (100, 110, 310, 320, 330) as claimed in any one of claims 5 to 10, wherein said fender extension (110), said wheelhouse liner (100) and said one or more fasteners (310, 320, 330) are implemented as plastics material molded components or rubber molded components.

12. An assembly (100, 110, 310, 320, 330) as claimed in any one of claims 5 to 11, wherein said fender extension (110) and said wheelhouse liner (100) are shaped to mutually cooperate so as to render said peripheral edge (210) substantially enclosed when the assembly (100, 110, 310, 320, 330) is installed on said wheelhouse (20, 30).

13. An assembly (100, 110, 310, 320, 330) as claimed in claim 12, wherein said fender extension (110) and said wheelhouse liner (100) when installed onto said wheelhouse (20, 30) mutually cooperate to provide a gap for drainage purposes from said peripheral edge (210).

14. An assembly (100, 110, 310, 320, 330) as claimed in any one of claims 5 to 13, whereon each of said one or more fasteners (310, 320, 330) includes resilient spring members operable to snap-engage onto a peripheral edge of a corresponding fastening hole provided in said region of said peripheral edge, thereby coupling in a compressive manner said fender extension to said peripheral edge.

15. An assembly (100, 110, 310, 320, 330) as claimed in any one of claims 5 to 14, wherein each of said one or more fasteners (310, 320, 330) includes a first component (310) mountable to said fender extension (110), a second component (320) snap-engageable onto a corresponding hole (555) in said region of said peripheral edge, and a third component (330) mountable to said wheelhouse liner (100), and wherein said second component (320) includes at its first and second extreme ends features (560, 580) which are press-couplable to said first and third components (310, 330) respectively.

16. An assembly (100, 110, 310, 320, 330) as claimed in claim 15, wherein said second component (320) includes at least partially spherical structures (560, 580) at its first and second extreme ends couplable into resilient complementary recesses (710, 800) provided in said first and third components (310, 330).

17. An assembly (100, 110. 310, 320, 330) as claimed in claim 15, wherein the first and third components (310, 330) are provided with peripheral engaging projections (510a, 510b; 600) for enabling them to be preassembled onto said fender extension (110) and said wheelhouse liner (100) respectively, prior to said fender extension (110) and said wheelhouse liner (110) being mutually coupled together via said second component (320) engaging onto said region of said peripheral edge (210).

18. A method of mounting a wheelhouse assembly (100, 110, 310, 320, 330) to a wheelhouse (20, 30) of a road vehicle (10), said wheelhouse (20, 30) including a peripheral edge (210) along at least an upper region thereof,
said assembly (100, 110, 310, 320, 330) including a fender extension (110) for at least partially covering and protecting said peripheral edge (210), and a wheelhouse liner (100) for at least partially covering and protecting an inside surface of said wheelhouse (20, 30),
**characterized in that** said method includes steps of:
(a) including in said wheelhouse liner (100) hook-like features (220) for retaining said fender extension (110) onto said peripheral edge (210) at least during assembly or repair of said road vehicle (10); and
(b) mutually coupling said fender extension (110) and said wheelhouse liner (100) by applying one or more fasteners (310, 320, 330) engaged substantially at a region of said peripheral edge (210),
thereby mutually securing together said fender extension (110) and said wheelhouse liner (100) in the region substantially at said peripheral edge (210).

19. A method as claimed in claim 18, wherein each of said one or more fasteners (310, 320, 330) includes a first component (310) for engaging onto said fender extension (110), a third component (330) for engaging onto said wheelhouse liner (100), and a second component (320) couplable to said first and third components (310, 330), said method including further steps of:
(c) preassembling said first and third components (310, 330) onto said fender extension (110) and said wheelhouse liner (100) respectively;
(d) assembling said wheelhouse liner (100) into said wheelhouse (20, 30) via said hook-like features (220) engaging substantially onto said peripheral edge (210); and
(e) coupling said fender extension (110) via said first component (310) coupled to said second component (320) substantially to a region of said peripheral edge (210) and further to said third component (330) assembled onto the wheelhouse liner (100).

20. A method as claimed in claim 18 or 19, including a step of snap-engaging said second component (320) into a corresponding hole (555) in said region of said peripheral edge (210) for compressively holding said fender extension (110) into engagement with said wheelhouse (20, 30).

21. A fastener (310, 320, 330) to be used in a method as claimed in claim 18, said fastener (310, 320, 330) including first, second and third mutually cooperating components (310, 320, 330), wherein:
(f) said first component (310) is configured for engagement in operation onto a fender extension (110);
(g) said third component (330) is configured for engagement in operation onto a wheelhouse liner (100); and
(h) said second component (320) is configured to engage at its first end (580) into said first component (310), to engage at its second end (560) onto said third component (330), and to engage into a hole (555) substantially in a region of a peripheral edge (210) of a wheelhouse (20, 30) for securing said fender extension (110) and said wheelhouse liner (100) mutually together substantially to said region of said peripheral edge (210).

22. A fastener (310, 320, 330) as claimed in claim 21, wherein said first and third components (310, 330) include projections (590; 510a, 510b, 700) on a peripheral region thereof for enabling them in operation to preassembled to said fender extension (110) and said wheelhouse liner (100) respectively.

23. A fastener (310, 320, 330) as claimed in claim 21 or 22, wherein said second component (320) includes at its first and second extreme ends at least partially spherical structures (560, 580) which are press engageable into corresponding resilient recesses (710, 800) provided in said first and third components (310, 330) respectively.

24. A fastener (310, 320, 330) as claimed in claim 21, 22 or 23, wherein said second component (320) includes projecting resilient members (550) for engaging onto said hole (555) so as to hold said fender extension (110) in compression against said wheelhouse (20, 30).

25. A fastener (310, 320, 330) as claimed in any one of claims 21 to 24, said fastener (310, 320, 330) being fabricated from one of more of: molded plastics material, molded rubber material.

## Patentansprüche

1. Ein Radhaus-Liner (100), welcher an ein Radhaus (20, 30) eines Straßenfahrzeuges (10) montierbar ist, wobei das Radhaus eine Außenkante (210) entlang wenigstens eines oberen Bereiches desselben umfasst, **dadurch gekennzeichnet, dass** der Radhaus-Liner (100) hakenartige Elemente (220) zum Eingreifen in einen nach innen gefalteten Flansch (210) der Außenkante des Radhauses (20, 30) umfasst, wobei die genannten Elemente (220) benutzbar sind, um den Radhaus-Liner (100) zumindest während der Montage oder Reparatur des Straßenfahrzeuges (10) in Position zu halten.

2. Radhaus-Liner (100) nach Anspruch 1, **dadurch gekennzeichnet, dass** die hakenartigen Elemente (220) einen oder mehrere Haken umfassen.

3. Radhaus-Liner (100) nach Anspruch 2, **dadurch gekennzeichnet, dass** der Radhaus-Liner (100) ein Formteil aus Kunststoff ist, wobei der eine oder die mehreren Haken (220) einstückig mit dem Radhaus-Liner (100) geformt werden.

4. Radhaus-Liner (100) nach Anspruch 2 oder 3, **dadurch gekennzeichnet, dass** der eine oder die mehreren Haken (220) benutzbar sind, um den Radhaus-Liner (100) in einer festgelegten entsprechenden räumlichen Position in Bezug auf die Außenkante (210) des Radhauses (20, 30) zu halten.

5. Radhaus-Baugruppe (100, 110, 310, 320, 330), welche an ein Radhaus (20, 30) eines Straßenfahrzeuges (10) montierbar ist, wobei das Radhaus (20, 30) eine Außenkante (210) entlang wenigstens eines oberen Bereiches desselben umfasst,
wobei die Radhaus-Baugruppe (100, 110, 310, 320, 330) eine Kotflügelverbreiterung (110) zum zumindest teilweisen Abdecken und Schützen der Außenkante (210) und einen Radhaus-Liner (100) nach Anspruch 1 zum zumindest teilweisen Abdecken und Schützen einer inneren Oberfläche des Radhauses (20, 30) umfasst,
**dadurch gekennzeichnet, dass** der Radhaus-Liner (100) hakenartige Elemente (220) zum Halten des Radhaus-Liners (100) auf der Außenkante (210) zumindest während der Montage oder Reparatur des Straßenfahrzeuges (10) umfasst, und dass die Kotflügelverbreiterung (110) und der Radhaus-Liner (100) so benutzbar sind, dass sie bei Betrieb durch ein oder mehrere Befestigungselemente (310, 320, 330) gegenseitig aneinandergekoppelt sind, die im wesentlichen in einem Bereich der Außenkante (210) eingreifen, wobei sie die Kotflügelverbreiterung (110) und den Radhaus-Liner (100) in dem im wesentlichen an der Außenkante (210) liegenden Bereich aneinander fixieren.

6. Baugruppe (100, 110, 310, 320, 330) nach Anspruch 5, **dadurch gekennzeichnet, dass** die hakenartigen Elemente (220) einen oder mehrere Haken (220) umfassen, die in dem Radhaus-Liner (100) inbegriffen sind, um den Liner (100) an die Außenkante (210) zu klipsen.

7. Baugruppe (100, 110, 310, 320, 330) nach Anspruch 6, **dadurch gekennzeichnet, dass** der eine oder die mehreren Haken (220) in der Lage sind, den Radhaus-Liner (100) vor dem Hinzufügen der Kotflügelverbreiterung (110) und des einen oder der mehreren Befestigungselemente (310, 320, 330) an der Außenkante in Position zu halten.

8. Baugruppe (100, 110, 310, 320, 330) nach Anspruch 6, **dadurch gekennzeichnet, dass** der eine oder die mehreren Haken (220) dazu beschaffen sind, in einen nach innen gefalteten Flansch (210) der Außenkante des Radhauses (20, 30) geklipst zu werden.

9. Baugruppe (100, 110, 310, 320, 330) nach den Ansprüchen 5, 6, 7 oder 8, **dadurch gekennzeichnet, dass** ein Bereich (310) jedes des einen oder der mehreren Befestigungselemente (310, 320, 330) darauf ausgelegt ist, in die Kotflügelverbreiterung (110) vormontiert zu werden, bevor die Kotflügelverbreiterung (110) über den Bereich der Außenkante (210) des Radhauses (20, 30) mit dem Radhaus-Liner (100) gekoppelt wird.

10. Baugruppe (100, 110, 310, 320, 330) nach einem der Ansprüche 5 bis 9, **dadurch gekennzeichnet, dass** das eine oder die mehreren Befestigungselemente (310, 320, 330) so benutzbar ist bzw. sind, dass die Kotflügelverbreiterung (110) durch zusammendrückendes Eingreifen mit der Außenkante gekoppelt wird.

11. Baugruppe (100, 110, 310, 320, 330) nach einem der Ansprüche 5 bis 10, **dadurch gekennzeichnet, dass** die Kotflügelverbreiterung (110), der Radhaus-Liner (100) und das eine oder die mehreren Befestigungselemente (310, 320, 330) als Formteile aus Kunststoff oder als Formteile aus Gummi ausgeführt werden.

12. Baugruppe (100, 110, 310, 320, 330) nach einem der Ansprüche 5 bis 11, **dadurch gekennzeichnet, dass** die Kotflügelverbreiterung (110) und der Radhaus-Liner (100) so ausgeformt sind, dass sie miteinander zusammenwirken, so dass die Außenkante (210) im wesentlichen umschlossen ist, wenn die Radhaus-Baugruppe (100, 110, 310, 320, 330) am Radhaus (20, 30) montiert ist.

13. Baugruppe (100, 110, 310, 320, 330) nach Anspruch 12, **dadurch gekennzeichnet, dass** die Kotflügelverbreiterung (110) und der Radhaus-Liner (100), wenn sie ans Radhaus (20, 30) montiert sind, so miteinander zusammenwirken, dass ein Spalt für Drainagezwecke von der Außenkante (210) hergestellt wird.

14. Baugruppe (100, 110, 310, 320, 330) nach einem der Ansprüche 5 bis 13, **dadurch gekennzeichnet, dass** jedes der einen oder der mehreren Befestigungselemente (310, 320, 330) nachgiebige Federelemente umfasst, die dazu nutzbar sind, an der Außenkante eines entsprechenden Befestigungslochs im Bereich der Außenkante einzuschnappen, wobei die Kotflügelverbreiterung in zusammendrückender Weise mit der Außenkante gekoppelt wird.

15. Baugruppe (100, 110, 310, 320, 330) nach einem der Ansprüche 5 bis 14, **dadurch gekennzeichnet, dass** jedes von dem einen oder den mehreren Befestigungselementen (310, 320, 330) ein erstes, auf die Kotflügelverbreiterung (110) montierbares Teil (310), ein zweites, in ein entsprechendes Loch (555) im Bereich der Außenkante einschnappbares Teil (320) und ein drittes, an den Radhaus-Liner (100) montierbares Teil (330) umfasst, und dass das zweite Teil (320) an seinen ersten und zweiten äußeren Enden Merkmale (560, 580) umfasst, welche in pressender Weise jeweils mit dem ersten bzw. mit dem dritten Teil (310, 330) gekoppelt werden können.

16. Baugruppe (100, 110, 310, 320, 330) nach Anspruch 15, **dadurch gekennzeichnet, dass** das zweite Teil (320) an seinen ersten und zweiten äußeren Enden wenigstens teilweise kugelförmige Strukturen (560, 580) umfasst, die mit nachgiebigen gegengleichen Aussparungen (710, 800) gekoppelt werden können, die jeweils in den ersten und dritten Teilen (310, 330) vorhanden sind.

17. Baugruppe (100, 110, 310, 320, 330) nach Anspruch 15, **dadurch gekennzeichnet, dass** die ersten und dritten Teile (310, 330) mit seitlich eingreifenden Vorsprüngen (510a, 510b, 600) ausgestattet sind, die sie dazu befähigen, sowohl an der Kotflügelverbreiterung (110) als auch am Radhaus-Liner (100) vormontiert zu werden, bevor die Kotflügelverbreiterung (110) und der Radhaus-Liner (100) mittels des zweiten Teils (320), welches an dem Bereich der Außenkante (210) angreift, miteinander verbunden werden.

18. Verfahren zum Montieren einer Radhaus-Baugruppe (100, 110, 310, 320, 330) an ein Radhaus (20, 30) eines Straßenfahrzeuges (10), wobei das Radhaus (20, 30) eine Außenkante (210) entlang wenigstens eines oberen Bereiches desselben umfasst,
wobei die Baugruppe (100, 110, 310, 320, 330) eine Kotflügelverbreiterung (110) zum zumindest teilweisen Abdecken und Schützen der Außenkante (210) und einen Radhaus-Liner (100) zum zumindest teilweisen Abdecken und Schützen einer inneren Oberfläche des Radhauses (20, 30) umfasst,
**dadurch gekennzeichnet, dass** das Verfahren folgende Schritte umfasst:
(a) das Einschließen von hakenartigen Elementen (220) in den Radhaus-Liner (100) zum Halten der Kotflügelverbreiterung (110) an der Außenkante (210) zumindest während der Montage oder Reparatur des Straßenfahrzeuges (10); und
(b) gegenseitiges Aneinanderkoppeln der Kotflügelverbreiterung (110) und des Radhaus-Liners (100) durch Anbringen von einem oder mehreren Befestigungselementen (310, 320, 330), die im wesentlichen an einem Bereich der Außenkante (210) eingreifen, wodurch sie die Kotflügelverbreiterung (110) und den Radhaus-Liner (100) in dem im wesentlichen an der Außenkante (210) liegenden Bereich gegenseitig miteinander verbinden.

19. Verfahren nach Anspruch 18, **dadurch gekennzeichnet, dass** jedes von dem einen oder den mehreren Befestigungselementen (310, 320, 330) ein erstes Teil (310) zum Angreifen an der Kotflügelverbreiterung (110), ein drittes Teil (330) zum Angreifen an den Radhaus-Liner (100) und ein zweites Teil (320), das mit dem ersten und dem dritten Teil (310, 330) gekoppelt werden kann, umfasst, wobei das Verfahren des weiteren folgende Schritte umfasst:
(c) Vormontage des ersten und des dritten Teils (310, 330) jeweils an der Kotflügelverbreiterung (110) bzw. dem Radhaus-Liner (100),
(d) Montage des Radhaus-Liners (100) in das Radhaus (20, 30) mittels der hakenartigen Elemente (220), die im wesentlichen an der Außenkante (210) angreifen, und
(e) Koppeln der Kotflügelverbreiterung (110) mittels des ersten Teils (310), welcher mit dem zweiten Teil (320) gekoppelt ist, im wesentlichen an den Bereich der Außenkante (210), und weiter an das dritte, an den Radhaus-Liner (100) montierte Teil (330).

20. Verfahren nach Anspruch 18 oder 19, **dadurch gekennzeichnet, dass** es einen Schritt des Einschnappens des zweiten Teils (320) in ein entsprechendes Loch (555) in den Bereich der Außenkante (210), der dazu dient, die Kotflügelverbreiterung (110) auf komprimierende Weise in Eingriff mit dem Radhaus (20, 30) zu halten, umfasst.

21. Befestigungselement (310, 320, 330) zur Nutzung in einem Verfahren nach Anspruch 18, wobei das Befestigungselement (310, 320, 330) ein erstes, ein zweites und ein drittes Teil (310, 320, 330) umfasst, die gegenseitig zusammenwirken, **dadurch gekennzeichnet, dass**:
(f) das erste Teil (310) so gestaltet ist, dass es im Betrieb in die Kotflügelverbreiterung (110) greift;
(g) das dritte Teil (330) so gestaltet ist, dass es im Betrieb in den Radhaus-Liner (100) greift; und
(h) das zweite Teil (320) so ausgelegt ist, dass es an seinem ersten Ende (580) in das erste Teil (310) greift, an seinem zweiten Ende (560) in das dritte Teil (330) greift, und dass es in ein Loch (555) greift, das im wesentlichen in einem Bereich der Außenkante (210) des Radhauses (20, 30) angebracht ist, um die Kotflügelverbreiterung (110) und den Radhaus-Liner (100) zusammen im wesentlichen an dem an der Außenkante (210) liegenden Bereich zu befestigen.

22. Befestigungselement (310, 320, 330) nach Anspruch 21, **dadurch gekennzeichnet, dass** die ersten und dritten Teile (310, 330) in Randbereichen davon mit Vorsprüngen (590; 510a, 510b, 600) ausgestattet sind, die sie dazu befähigen, im Betrieb an der Kotflügelverbreiterung (110) bzw. am Radhaus-Liner (100) vormontiert zu werden.

23. Befestigungselement (310, 320, 330) nach Anspruch 21 oder 22, **dadurch gekennzeichnet, dass** das zweite Teil (320) an seinen ersten und zweiten äußeren Enden zumindest teilweise kugelförmige Strukturen (560, 580) umfasst, die in gegengleiche nachgiebige Aussparungen (710, 800) eingepresst werden können, die jeweils in den ersten bzw. dritten Teilen (310, 330) vorhanden sind.

24. Befestigungselement (310, 320, 330) nach Anspruch 21, 22 oder 23, **dadurch gekennzeichnet, dass** das zweite Teil (320) vorspringende nachgiebige Elemente (550) zum Eingreifen in das Loch (555) umfasst, um die Kotflügelverbreiterung (110) mit Druck gegen das Radhaus (20, 30) zu halten.

25. Befestigungselement (310, 320, 330) nach einem der Ansprüche 21 bis 24, **dadurch gekennzeichnet, dass** das Befestigungselement (310, 320, 330) aus einem oder mehreren der Folgenden bestehen: Formteile aus Kunststoff, Formteile aus Gummi.

## Revendications

1. Coquille (100) de passage de roue pouvant être montée sur un passage de roue (20, 30) d'un véhicule routier (10), ledit passage de roue comprenant un rebord périphérique (210) le long d'au moins une zone supérieure de celui-ci, ***caractérisée en ce que*** ladite coquille (100) comprend des éléments en forme de crochet (220) destinés à s'engager sur une bride (210) repliée intérieurement dudit rebord périphérique dudit passage de roue (20, 30), lesdits éléments (220) étant utilisables pour retenir ladite coquille (100) de passage de roue en position au moins pendant le montage ou la réparation dudit véhicule routier (10).

2. Coquille (100) de passage de roue selon la revendication 1, dans laquelle lesdits éléments en forme de crochet (220) comprennent un ou plusieurs crochets (220).

3. Coquille (100) de passage de roue selon la revendication 2, dans laquelle ladite coquille (100) de passage de roue est une pièce moulée en matière plastique, dans laquelle le(s)dit(s) un ou plusieurs crochets (220) sont moulés solidairement dans ladite coquille (100) de passage de roue.

4. Coquille (100) de passage de roue selon la revendication 2 ou 3, dans laquelle le(s)dit(s) un ou plusieurs crochets (220) sont utilisables pour maintenir ladite coquille (100) dans une position spatiale définie correspondante par rapport audit rebord périphérique (210) dudit passage de roue (20, 30).

5. Ensemble (100, 110, 310, 320, 330) pour passage de roue pouvant être monté sur un passage de roue (20, 30) d'un véhicule routier (10), ledit passage de roue (20, 30) comprenant un rebord périphérique (210) le long d'au moins une zone supérieure,
ledit ensemble (100, 110, 310, 320, 330) comprenant un prolongement formant aile (110) pour recouvrir et protéger, au moins partiellement, ledit rebord périphérique (210), et une coquille (100) de passage de roue selon la revendication 1 pour recouvrir et protéger, au moins partiellement, une surface intérieure dudit passage de roue (20, 30),
***caractérisé en ce que*** ladite coquille de passage de roue comprend des éléments en forme de crochet (220) destinés à retenir ladite coquille (100) de passage de roue sur ledit rebord périphérique (210) au moins pendant le montage ou la réparation dudit véhicule routier (10), et ledit prolongement formant aile (110) et ladite coquille (100) de passage de roue étant utilisables pour être accouplés l'un à l'autre en opération par un ou plusieurs éléments de fixation (310, 320, 330) qui s'engagent essentiellement dans une zone dudit rebord périphérique (210), fixant ainsi ensemble ledit prolongement formant aile (110) et ladite coquille (100) de passage de roue dans la zone située sensiblement sur ledit rebord périphérique (210).

6. Ensemble (100, 110, 310, 320, 330) selon la revendication 5, dans lequel lesdits éléments en forme de crochet (220) comprennent un ou plusieurs crochets (220) compris dans ladite coquille (100) de passage de roue pour accrocher ladite coquille (100) sur ledit rebord périphérique (210).

7. Ensemble (100, 110, 310, 320, 330) selon la revendication 6, dans lequel le(s)dit(s) un ou plusieurs crochets (220) sont utilisables pour maintenir ladite coquille (100) de passage de roue en position sur ledit rebord périphérique avant l'ajout dudit prolongement formant aile (110) et desdits un ou plusieurs éléments de fixation (310, 320, 330).

8. Ensemble (100, 110, 310, 320, 330) selon la revendication 6, dans lequel le(s)dit(s) un ou plusieurs crochets (220) sont utilisables pour s'accrocher sur une bride (210) repliée vers l'intérieur dudit rebord périphérique dudit passage de roue (20, 30).

9. Ensemble (100, 110, 310, 320, 330) selon les revendications 5, 6, 7 ou 8, dans lequel une portion (310) de chacun dudit/desdits un ou plusieurs éléments de fixation (310, 320, 330) est apte à être pré-assemblée dans ledit prolongement formant aile (110) avant que ledit prolongement formant aile (110) ne soit associé à ladite coquille (100) de passage de roue via ladite zone dudit rebord périphérique (210) dudit passage de roue (20, 30).

10. Ensemble (100, 110, 310, 320, 330) selon l'une quelconque des revendications 5 à 9, dans lequel le(s)dit(s) un ou plusieurs éléments de fixation (310, 320, 330) sont utilisables pour associer ledit prolongement formant aile (110) par engagement compressif sur ledit rebord périphérique.

11. Ensemble (100, 110, 310, 320, 330) selon l'une quelconque des revendications 5 à 10, dans lequel ledit prolongement formant aile (110), ladite coquille (100) de passage de roue et le(s)dit(s) un ou plusieurs éléments de fixation (310, 320, 330) sont fabriqués sous forme de composants moulés en matière plastique ou de composants moulés en caoutchouc.

12. Ensemble (100, 110, 310, 320, 330) selon l'une quelconque des revendications 5 à 11, dans lequel ledit prolongement formant aile (110) et ladite coquille (100) de passage de roue sont conformés pour coopérer l'un avec l'autre afin de faire que ledit rebord périphérique (210) soit sensiblement enfermé lorsque l'ensemble (100, 110, 310, 320, 330) est installé sur ledit passage de roue (20, 30).

13. Ensemble (100, 110, 310, 320, 330) selon la revendication 12, dans lequel ledit prolongement formant aile (110) et ladite coquille (100) de passage de roue, lorsqu'ils sont installés sur ledit passage de roue (20, 30), coopèrent l'un avec l'autre pour fournir un passage à des fins de drainage dudit rebord périphérique (210).

14. Ensemble (100, 110, 310, 320, 330) selon l'une quelconque des revendications 5 à 13, sur lequel chacun dudit/desdits un ou plusieurs éléments de fixation (310, 320, 330) comprend des éléments résilients de ressort utilisables pour s'engager par pression sur un rebord périphérique d'un trou de fixation correspondant ménagé dans ladite zone dudit rebord périphérique, associant ainsi par compression ledit prolongement formant aile audit rebord périphérique.

15. Ensemble (100, 110, 310, 320, 330) selon l'une quelconque des revendications 5 à 14, dans lequel chacun dudit/desdits un ou plusieurs éléments de fixation (310, 320, 330) comprend un premier composant (310) pouvant être monté sur ledit prolongement formant aile (110), un deuxième composant (320) insérable par pression dans un trou correspondant (555) situé dans ladite zone dudit rebord périphérique, et un troisième composant (330) pouvant être monté sur ladite coquille (100) de passage de roue, et dans lequel ledit deuxième composant (320) comprend sur ses première et deuxième extrémités, des éléments (560, 580) qui peuvent être accouplés par pression respectivement auxdits premier et troisième composants (310, 330).

16. Ensemble (100, 110, 310, 320, 330) selon la revendication 15, dans lequel ledit deuxième composant (320) comprend des structures (560, 580) sphériques au moins partiellement sur les première et deuxième extrémités, qui peuvent être emboîtées dans des évidements élastiques complémentaires (710, 800) ménagés dans lesdits premier et troisième composants (310, 330).

17. Ensemble (100, 110, 310, 320, 330) selon la revendication 15, dans lequel le premier et le troisième composants (310, 330) sont pourvus de saillies d'accouplement périphériques (510a, 510b ; 600) pour leur permettre d'être préassemblés respectivement sur ledit prolongement formant aile (110) et sur ladite coquille (100) de passage de roue, avant que ledit prolongement formant aile (110) et ladite coquille (100) de passage de roue ne soient accouplés l'un à l'autre par l'intermédiaire dudit deuxième composant (320) s'engageant sur ladite zone dudit rebord périphérique (210).

18. Procédé de montage d'un ensemble (100, 110, 310, 320, 330) pour passage de roue sur un passage de roue (20, 30) d'un véhicule routier (10), ledit passage de roue (20, 30) comprenant un rebord périphérique (210) le long d'au moins une zone supérieure de celui-ci,
ledit ensemble (100, 110, 310, 320, 330) comprenant un prolongement formant aile (110) pour recouvrir et protéger, au moins partiellement, ledit rebord périphérique (210), et une coquille (100) de passage de roue pour recouvrir et protéger, au moins partiellement, une surface intérieure dudit passage de roue (20, 30),
***caractérisé en ce que*** ledit procédé comprend les étapes consistant à :
(a) inclure dans ladite coquille (100) de passage de roue des éléments en forme de crochet (220) pour retenir ledit prolongement formant aile (110) sur ledit rebord périphérique (210) au moins pendant le montage ou la réparation dudit véhicule routier (10) ; et
(b) accoupler l'un à l'autre ledit prolongement formant aile (110) et ladite coquille (100) de passage de roue en utilisant un ou plusieurs éléments de fixation (310, 320, 330) essentiellement engagés dans une zone dudit rebord périphérique (210),
assujettissant ainsi l'un à l'autre ledit prolongement formant aile (110) et ladite coquille (100) de passage de roue dans la zone essentiellement située sur ledit rebord périphérique (210).

19. Procédé selon la revendication 18, dans lequel chacun dudit/desdits un ou plusieurs éléments de fixation (310, 320, 330) comprend un premier composant (310) destiné à un engagement sur ledit prolongement formant aile (110), un troisième composant (330) destiné à un engagement sur ladite coquille (100) de passage de roue, et un deuxième composant (320) pouvant être accouplé auxdits premier et troisième composants (310, 330), ledit procédé comprenant les étapes supplémentaires consistant à :
(c) préassembler lesdits premier et troisième composants (310, 330), respectivement sur ledit prolongement formant aile (110) et ladite coquille (100) de passage de roue ;
(d) monter ladite coquille (100) de passage de roue dans ledit passage de roue (20, 30) via lesdits éléments en forme de crochet (220) s'engageant essentiellement sur ledit rebord périphérique (210) ; et
(e) coupler ledit prolongement formant aile (110), par l'intermédiaire dudit premier composant (310) couplé audit deuxième composant (320), essentiellement à une zone dudit rebord périphérique (210) et de plus audit troisième composant (330) assemblé sur la coquille (100) de passage de roue.

20. Procédé selon la revendication 18 ou 19, comprenant une étape consistant à engager par pression ledit deuxième composant (320) dans un trou correspondant (555) dans ladite zone dudit rebord périphérique (210) afin de maintenir par compression ledit prolongement formant aile (110) en engagement avec ledit passage de roue (20, 30).

21. Elément de fixation (310, 320, 330) destiné à être utilisé dans un procédé selon la revendication 18, ledit élément de fixation (310, 320, 330) comprenant un premier, un deuxième et un troisième composants (310, 320, 330) coopérant entre eux, dans lequel :
(f) ledit premier composant (310) est configuré pour un engagement en service sur un prolongement formant aile (110) ;
(g) ledit troisième composant (330) est configuré pour un engagement en service sur une coquille (100) de passage de roue ; et
(h) ledit deuxième composant (320) est configuré pour s'engager au niveau de sa première extrémité (580) dans ledit premier composant (310), pour s'engager au niveau de sa deuxième extrémité (560) sur ledit troisième composant (330), et pour s'engager dans un trou (555) essentiellement situé dans une zone d'un rebord périphérique (210) d'un passage de roue (20, 30) pour assujettir ledit prolongement formant aile (110) et ladite coquille (100) de passage de roue ensemble essentiellement dans ladite zone dudit rebord périphérique (210).

22. Elément de fixation (310, 320, 330) selon la revendication 21, dans lequel lesdits premier et troisième composants (310, 330) comportent des saillies (590 ; 510a, 510b, 700) sur une zone périphérique de ceux-ci pour leur permettre, en service, d'être préassemblés respectivement audit prolongement formant aile (110) et à ladite coquille (100) de passage de roue.

23. Elément de fixation (310, 320, 330) selon la revendication 21 ou 22, dans lequel ledit deuxième composant (320) comprend, sur ses première et deuxième extrémités, des structures (560, 580) au moins partiellement sphériques qui sont engageables par pression dans des évidements résilients correspondants (710, 800) ménagés respectivement dans lesdits premier et troisième composants (310, 330).

24. Elément de fixation (310, 320, 330) selon la revendication 21, 22 ou 23, dans lequel ledit deuxième composant (320) comprend des éléments résilients saillants (550) destinés à s'engager sur ledit trou (550) afin de maintenir ledit prolongement formant aile (110) en compression contre ledit passage de roue (20, 30).

25. Elément de fixation (310, 320, 330) selon l'une quelconque des revendications 21 à 24, ledit élément de fixation (310, 320, 330) étant fabriqué dans l'un ou plusieurs d'entre : une matière plastique moulée, un matériau caoutchouté moulé.
